Europäisches Patentamt

European Patent Office

Office européen des brevets

(11) Veröffentlichungsnummer: **0 404 105**

**A1**

(12) **EUROPÄISCHE PATENTANMELDUNG**

(21) Anmeldenummer: **90111656.6**

(51) Int. Cl.5: **A01F 15/08**

(22) Anmeldetag: **20.06.90**

(30) Priorität: **23.06.89 US 370537**

(43) Veröffentlichungstag der Anmeldung:
**27.12.90 Patentblatt 90/52**

(84) Benannte Vertragsstaaten:
**DE FR GB IT**

(71) Anmelder: **DEERE & COMPANY**
**1 John Deere Road**
**Moline, Illinois 61265(US)**

(72) Erfinder: **Anstey, Henry Dennis**
**Rural Route 4, Box 188A**
**Ottumwa, Iowa 52501(US)**
Erfinder: **Rumph, George William**
**Rural Route 3, Box 183**
**Bloomfield, Iowa 52537(US)**

(74) Vertreter: **Feldmann, Bernhard et al**
**DEERE & COMPANY European Office Patent**
**Department Steubenstrasse 36-42**
**D-6800 Mannheim 1(DE)**

(54) **Rundballenpresse mit einer Vorrichtung zum Umhüllen eines in einer Ballenformkammer gewickelten Rundballens.**

(57) An eine Rundballenpresse mit einer Vorrichtung zum Umhüllen eines fertig in einer Ballenformkammer gewickelten Rundballens aus landwirtschaftlichem Gut mit einer Materialbahn aus Netzwerk, Plastik oder dergleichen ist ein Zuführgehäuse (38) zur Aufnahme des rollenförmigen Umhüllungsmaterials angeschlossen, das eine Bodenwand (42) und eine erste im wesentlichen vertikal verlaufende und sich quer über die Breite der Ballenformkammer erstreckende Wand (40) aufweist, wobei die Bodenwand (42) in dem Zuführgehäuse (38) stationär angeordnet ist, mit Abstand vor der ersten Wand (40) endet, derart geneigt ausgebildet ist, daß sie sich von ihrem Ende vor der ersten Wand (40) schräg nach oben zu einer dem Ende abgelegenen Kante (52) erstreckt und eine derart geformte und mit der ersten Wand (40) zusammenwirkende Oberfläche (44) aufweist, daß der Reibwiderstand bei abrollendem Umhüllungsmaterial und sich dabei verkleinerndem Rollendurchmesser im wesentlichen konstant bleibt.

**FIG. 3**

## Rundballenpresse mit einer Vorrichtung zum Umhüllen eines in einer Ballenformkammer gewickelten Rundballens

Die Erfindung bezieht sich auf eine Rundballenpresse mit einer Vorrichtung zum Umhüllen eines fertig in einer Ballenformkammer gewickelten Rundballens aus landwirtschaftlichem Gut mit einer Materialbahn aus Netzwerk, Plastik oder dergleichen, wobei an die Rundballenpresse ein Zuführgehäuse zur Aufnahme des rollenförmigen Umhüllungsmaterials angeschlossen ist, das eine Bodenwand und eine erste im wesentlichen vertikal verlaufende und sich quer über die Breite der Ballenformkammer erstreckende Wand aufweist.

Bei dieser bekannten Rundballenpresse (US-A-4 691 503) wird zum Einlegen des rollenförmigen Umhüllungsmaterials ein Haubenteil des Zuführgehäuses um eine horizontal verlaufende Achse nach unten geklappt, damit das Umhüllungsmaterial leicht eingelegt werden kann. Gleichzeitig werden dabei die Bodenwand und eine Spreizwalze sowie Brems- und Haltemittel mitverschwenkt, wobei die aus Gelenkarmen, Bremsstange und Federn bestehenden Brems- und Haltemittel dazu dienen, beim Umhüllen eines fertig gewickelten Rundballens auf die Rolle mit dem Umhüllungsmaterial, deren Durchmesser sich bei diesem Vorgang ständig verkleinert, einen konstanten, der Umlaufbewegung der Rolle entgegenwirkenden Widerstand auszuüben. Nach dem Einlegen der Rolle mit dem Umhüllungsmaterial wird dieses von Hand über die Spreizwalze und durch den Einzugsspalt zweier Zuführwalzen bis zu dem Einzugsbereich des Rundballens geführt. Danach wird der Haubenteil mit der Rolle Umhüllungsmaterial, der Spreizwalze und den Brems- und Haltemitteln, die die Rolle bereits umfassen, nach oben in ihre Betriebsstellung verschwenkt. Obwohl diese bekannte Vorrichtung zufriedenstellend arbeitet, ist doch zum Verschwenken in die Betriebsstellung ein nicht unerheblicher Kraftaufwand erforderlich, und die Brems- und Haltemittel stellen kostspielige Einrichtungen dar.

Andererseits ist bei einer kombinierten Abroll- und Abreißvorrichtung für im Haushalt zu verwendende Vorratsrollen (DE-A-2 032 449) nicht mehr neu, die Vorratsrolle auf zwei gebogenen und etwa trichterförmig verlaufenden Auflageflächen aufzulegen, wodurch die Vorratsrolle zu jeder Zeit, auch bei stetig abnehmendem Durchmesser, sicher geführt und die Materialbahn einwandfrei einer Abrißkante zugeführt werden soll. Zum Abreißen muß die Rolle gegebenenfalls mit der Hand festgesetzt werden.

Bei Vorrichtungen zur Entnahme von Papier aus Rollen zur Verwendung in Küchen oder Toiletten ist es bereits bekannt (US-A-4 502 621), die Papierrolle auf einem geraden, leicht nach unten geneigt verlaufenden Boden aufzulegen. Durch Auf- und Abbewegen eines Stellknopfes wird das Papier abgewickelt, wobei der schräge Boden dazu dient, daß die Rolle auf dem Stellknopf bei abnehmendem Durchmesser zuläuft. Auch diese Vorrichtung ist nicht auf Rundballenpressen übertragbar.

Die mit der Erfindung zu lösende Aufgabe wird darin gesehen, das Zuführgehäuse einfacher auszubilden. Diese Aufgabe ist dadurch gelöst worden, daß die Bodenwand in dem Zuführgehäuse stationär angeordnet ist, mit Abstand vor der ersten Wand endet, derart geneigt ausgebildet ist, daß sie sich von ihrem Ende vor der ersten Wand schräg nach oben zu einer dem Ende abgelegenen Kante erstreckt und eine derart geformte und mit der ersten Wand zusammenwirkende Oberfläche aufweist, daß der Reibwiderstand bei abrollendem Umhüllungsmaterial und sich dabei verkleinerndem Rollendurchmesser im wesentlichen konstant bleibt. Auf diese Weise wird die Bodenwand beim Laden der Rolle mit dem Umhüllungsmaterial nicht mitverschwenkt und bildet mit der ersten Wand einen Querspalt, der als Zuführkanal für das einzufädelnde Umhüllungsmaterial dient. Die Bodenwand ist dabei derart gestaltet, daß sich eine auf ihr befindliche Rolle mit Umhüllungsmaterial - gleichgültig, welchen Durchmesser sie aufweist - stets gegen die Bodenwand und gegen die im wesentlichen vertikal verlaufende erste Wand abstützt und zwischen diesen leicht eingeklemmt wird. Diese Klemmwirkung wiederum wirkt der Drehbewegung der nicht selbst angetriebenen Rolle beim Umhüllungsvorgang entgegen, so daß auf gesonderte Brems- und Haltemittel, die insbesondere beim mechanischen Abschneiden des Umhüllungsmaterials nach dem abgeschlossenen Umhüllungsvorgang erforderlich sind, verzichtet werden kann. Das Umhüllungsmaterial ist in der Regel auf eine Papprolle aufgewickelt, und es ist dafür Sorge zu tragen, daß die Breite des Querspalts kleiner ist als der Außendurchmesser der Papprolle, damit die Brems- oder Klemmwirkung bis zum beinahe vollständigen Abziehen des Umhüllungsmaterials, das ein Netzwerk oder ein Plastikvollmaterial sein kann, erhalten bleibt.

Eine besonders gute Brems- oder Klemmwirkung wird dadurch erreicht, daß die Oberfläche der Bodenwand mit Bezug auf eine Längsrichtung konvex ausgebildet ist.

Damit das Umhüllungsmaterial beim Laden nicht beschädigt wird und die Bedienungsperson dabei auch keiner Verletzungsgefahr ausgesetzt ist, wird nach der Erfindung ferner vorgeschlagen, daß die obere Kante der Bodenwand abgerundet ausgebildet ist.

Was die Anordnung der Bodenwand anbelangt, so kann nach der Erfindung außerdem vorgesehen sein, daß in dem Zuführgehäuse zwei Tragwände mit einem gegenseitigen Abstand vorgesehen sind, der der Breite der Ballenformkammer entspricht, wobei jede Tragwand mit Abstand zu der ersten Wand in ihrer Oberseite eine Aussparung und mit noch größerem Abstand zu der ersten Wand eine an ihrem oberen Ende abgebogene Lasche aufweist und wobei das der ersten Wand zugelegene Ende der Bodenwand in den Aussparungen aufgenommen ist und die Laschen mit dem weiter von der ersten Wand abgelegenen Bereich der Bodenwand verbunden sind. Somit erhält man mit besonders einfachen Mitteln eine stabile Befestigung der Bodenwand, wobei die abgerundete obere Kante durch Abbiegen der Bodenwand über den abgebogenen Laschen entsteht.

Zum seitlichen Ausrichten der Rolle mit dem Umhüllungsmaterial kann an jeder Tragwand eine vertikal gerichtete Halteplatte mit einer oberen abgewinkelten Kante angeordnet sein, die oberhalb der Bodenwand enden. Die abgewinkelten Kanten dienen wiederum Sicherheitsaspekten.

Zweckmäßig können die Tragwände in ihrem Bereich unterhalb des durch das Ende der Bodenwand der ersten Wand gebildeten Querspalts eine Spreizrolle über Schrauben drehbar aufnehmen, die auch zum Anschluß des einen Endes der Halteplatten dienen, deren anderes Ende mit den Tragwänden über auch die Laschen mit diesen verbindende Schrauben verbunden ist. Durch diese Maßnahmen ist sichergestellt, daß auch die Spreizrolle beim Laden nicht verschwenkt zu werden braucht, wobei darüber hinaus die vorgesehenen Schrauben zum Anschluß mehrerer Teile dienen.

In der Zeichnung ist ein nachfolgend näher erläutertes Ausführungsbeispiel der Erfindung dargestellt. Es zeigt:

Fig. 1 den rückwärtigen Teil einer großen Rundballenpresse mit angebauter Vorrichtung zum Umhüllen eines Rundballens in perspektivischer Ansicht,

Fig. 2 ein Zuführgehäuse in Seitenansicht mit hochgeschwenktem Deckel und einer Rolle mit Umhüllungsmaterial in ihrer Ladeposition und

Fig. 3 eine ähnliche Darstellung wie in Fig. 2, wobei jedoch der Deckel geschlossen ist und die Rolle mit dem Umhüllungsmaterial sich in ihrer Betriebsstellung befindet.

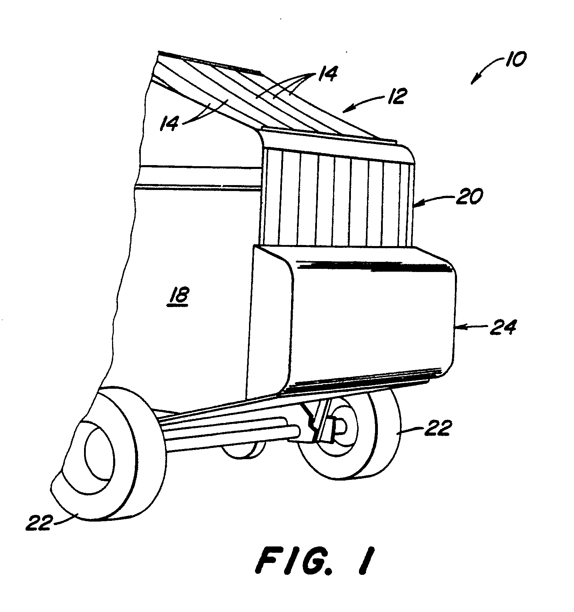

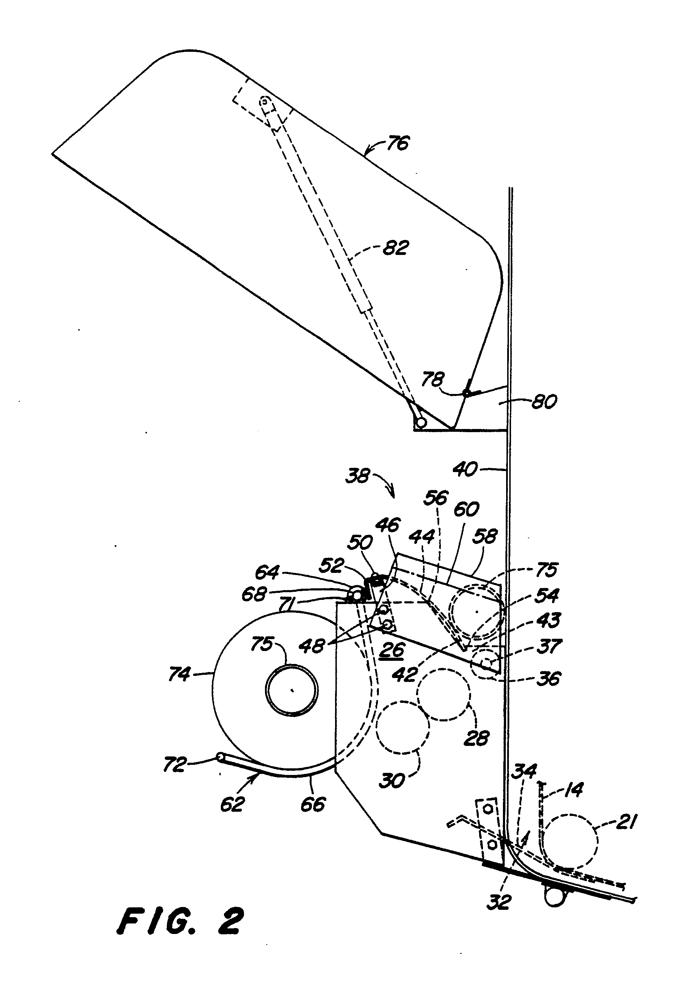

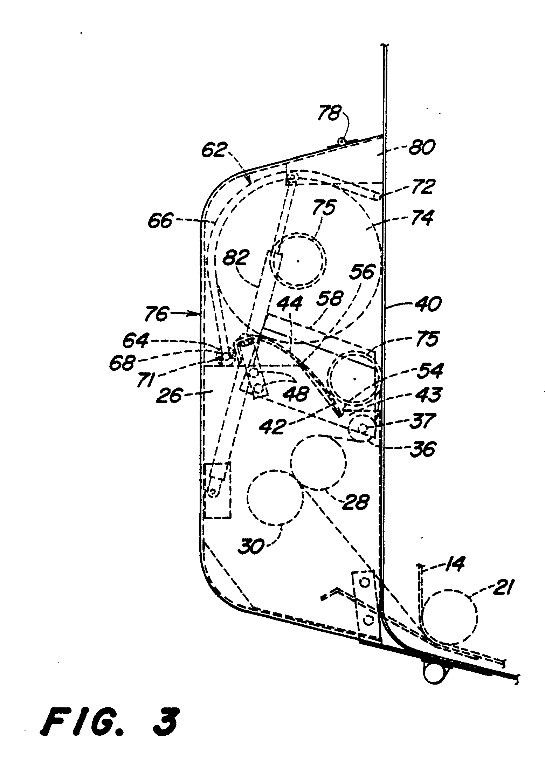

In Fig. 1 der Zeichnung ist der rückwärtige Teil einer großen Rundballenpresse 10 dargestellt, die eine Ballenformkammer 12 veränderbarer Größe aufweist. Letztere ist aus einer Vielzahl von nebeneinanderliegenden endlosen Riemen 14, zwei gegenüberliegenden nicht dargestellten Seitenwänden eines vorderen Teils, die einen ersten Satz Riemenleitrollen aufnehmen, und aus zwei sich gegenüberliegenden Seitenwänden 18 einer Auswurfklappe 20 für den fertig gewickelten Ballen gebildet, die einen zweiten Satz Riemenleitrollen einschließlich einer unteren in Fig. 2 und 3 erkennbaren Riemenleitrolle 21 aufnehmen. Die Rundballenpresse 10 ist auf zwei Laufrädern 22 angeordnet und wird im Einsatz von einem Ackerschlepper gezogen.

Aus den Fig. 2 und 3 ist eine Vorrichtung 24 zum Umwickeln eines fertiggestellten Ballens in der Ballenformkammer 12 mit Umhüllungsmaterial im einzelnen ersichtlich, die an einem rückwärtigen und unteren Teil der Auswurfklappe 20 angeschlossen ist. Die Vorrichtung 24 weist sich gegenüberliegende Tragwände 26 auf, die mit vorderen hochstehenden Flanschen versehen sind, die mit entsprechenden Flanschen an den rückwärtigen Enden der Seitenwände 18 der Auswurfklappe 20 verbindbar sind. Die sich gegenüberliegenden Enden von zwei übereinander angeordneten Zuführwalzen 28 und 30 für das Umhüllungsmaterial sind in den Tragwänden 26 drehbar gelagert. Wie aus den Fig. 2 und 3 ersichtlich ist, liegt die Zuführwalze 28 oberhalb und vor der Zuführwalze 30, so daß ein Zuführweg für das Umhüllungsmaterial entsteht, der tangential zu dem Ausgang der Zuführwalzen 28 und 30 verläuft und sich bis zu einem Einzug 32 erstreckt, der im wesentlichen aus einem Führungsblech 34 und dem Teil der Riemen 14 gebildet wird, die um die untere rückwärtige Riemenleitrolle 21 an der Auswurfklappe 20 geführt sind. Oberhalb und vor der Zuführwalze 28 ist noch eine Spreizwalze 36 in den oberen vorderen Bereichen der Tragwände 26 auf Schrauben 37 drehbar gelagert. Die Spreizwalze ist an ihren Enden mit gegenläufigen nicht dargestellten Wendeln versehen, die zum Auseinanderbreiten des Umhüllungsmaterials dienen, wenn dieses in die Ballenformkammer 12 eingespeist wird.

Die Vorrichtung 24 weist noch ein Zuführgehäuse 38 mit einer ersten vorderen Wand 40 auf, die aus einem vertikal ausgerichteten Blechteil besteht, der sich zwischen den rückwärtigen Enden der Seitenwände 18 der Auswurfklappe 20 erstreckt und mit diesen verbunden ist. Gleichfalls weist das Zuführgehäuse 38 eine sich nach vorne unten erstreckende Bodenwand 42 auf, die zusammen mit der vorderen Wand 40 zu einem Querspalt 43 oder Materialdurchgangsweg konvergiert, der zwischen der vorderen Kante der Bodenwand 42 und der vorderen Wand 40 gebildet ist. Die obere Oberfläche 44 der Bodenwand 42 ist von vorne nach hinten konvex gebogen, wobei diese Formgebung speziell ausgewählt wurde, um mit der vorderen Wand 40 derart zusammenzuwirken, daß sich ein Reibschluß mit dem sich noch auf der Rolle befindlichen Umhüllungsmaterial ergibt, dessen Zweck nachfolgend noch näher erläutert wird. Zwei I-förmig ausgebildete Laschen 46 mit nach außen abgebogenen Enden sind mit den oberen rückwärtigen Teilen der Tragwände 26 über jeweils zwei Abstand zueinander aufweisende Schrauben 48 verbunden. Obere rückwärtige Endteile der gebogenen Bodenwand 42 liegen auf den abgebogenen Enden der beiden Laschen 46 auf und sind mit diesen über Schrauben 50 verbunden. Das rückwärtige Ende der Bodenwand 42 ist nach unten abgebogen, so daß eine abgerundete Kante 52 entsteht, die das Einlegen einer neuen Rolle mit Umhüllungsmaterial erleichtert, was ebenfalls an späterer Stelle noch näher zu erläutern ist. Das vordere Ende der Bodenwand 42 wird von Aussparungen 54 gehalten, die in obere vordere Teile der Tragwände 26 eingearbeitet sind. Ein jeweils dritter Tragpunkt für die Bodenwand 42 wird durch Kanten 56 gebildet, die durch eine Abknickung der oberen Seiten der Tragwände 26 in deren mittleren Bereich entstehen. Die seitlich gerichteten Bewegungen einer sich auf der Bodenwand 42 befindlichen Rolle mit Umhüllungsmaterial werden durch zwei sich gegenüberliegende Halteplatten 58 begrenzt, die jeweils mit der zugehörigen Tragwand 26 über die Schrauben 48 und die Schrauben 37 verbunden sind. Auch der obere Teil einer jeden Halteplatte 58 ist nach außen abgebogen, so daß eine abgerundete Kante 60 entsteht, gegen die die Seiten des Umhüllungsmaterials anliegen können.

Ein Ladebügel 62 oder -arm für eine neue Rolle mit Umhüllungsmaterial ist vertikal schwenkbar im rückwärtigen oberen Bereich der beiden Tragwände 26 angeordnet, in seiner in Fig. 2 dargestellten Position in Ladestellung und in seiner Stellung nach Fig. 3 in Betriebsstellung dargestellt. Im einzelnen sind hierzu an den oberen rückwärtigen Enden der Tragwände 26 zueinander ausgerichtete Scheiben 64 derart angeschweißt, daß eine horizontale Schwenkachse entsteht. Der Ladebügel 62 besteht aus einem Gestell mit sich gegenüberliegenden Schenkeln 66, die entsprechend dem Umfang einer vollen Rolle mit Umhüllungsmaterial gebogen sind und nach außen gebogene Enden 68 aufweisen, die von den Scheiben 64 aufgenommen werden. Eine Sicherung erfolgt durch Stifte 71, die durch entsprechende Bohrungen in den Enden 68 der Schenkel 66 gesteckt werden können. Die beiden Enden 68 abgelegenen Enden der Schenkel 66 sind miteinander über einen Querteil verbunden, der als Griffteil 72 dient. Wenn sich der Ladebügel 62 in seiner unteren in Fig. 2 wiedergegebenen Aufnahme- oder Ladestellung befindet, liegen die gebogenen Schenkel 66 relativ niedrig zur Aufnahme einer Rolle 74 mit dem Umhüllungsmaterial. Eine Rolle 74, die zwischen 75 und 80 Pfund wiegen kann, kann dann von dem Boden aus oder vorzugsweise von der Ladepritsche eines Fahrzeuges eingelegt werden. Jedenfalls sollen beim Einlegen von Hand einer Rolle 74 so wenig wie möglich Muskelkräfte erforderlich werden. In der Regel ist das Umhüllungsmaterial auf einer Papprolle 75 aufgerollt, die in Fig. 3 zweimal in ihren verschiedenen Positionen in strichlinierten Linien wiedergegeben ist. Sobald eine Rolle 74 in die entsprechende Rundungen aufweisenden Schenkel 66 des Ladebügels 62 eingelegt worden ist, kann die Rolle 74 mit dem Umhüllungsmaterial auf die Oberfläche 44 der Bodenwand 42 dadurch verbracht werden, daß der Griffteil 72 angehoben und in seine in Fig. 3 dargestellte Position verschwenkt wird, die der Betriebsstellung entspricht. An dieser Stelle ist darauf hinzuweisen, daß die Hebelarme und Anlenkstellen für den Ladebügel 62 derart gewählt sind, daß die zum Hochschwenken des Ladebügels 62 erforderliche Kraft etwa dem halben Rollengewicht entspricht und daß der in seine Betriebsstellung nach Fig. 3 verschwenkte Ladebügel 62 in dieser aufgrund der Schwerkraft verbleibt. Außerdem ist noch ein die Vorrichtung 24 in ihrer Betriebsstellung abdeckender Deckel 76 vorgesehen, der in Fig. 2 in seiner hochgeschwenkten Stellung und in Fig. 3 in seiner geschlossenen Stellung wiedergegeben ist. Der Deckel 76 ist um Scharniere 78 verschwenkbar und über Winkeleisen 80 an die Rückkanten der Seitenwände 18 angeschlossen. In der geschlossenen oder Betriebsstellung schützt der Deckel 76 die Rolle 74 nicht nur gegen Fremdeinflüsse, sondern verhindert auch, daß der Ladebügel 62 aus seiner Stellung in Fig. 3 in seine Stellung nach Fig. 2 zurückfallen könnte. In seinen beiden Endstellungen wird der Deckel 76 über zwei Gasfedern 82 aktiv gehalten, die sich zwischen dem Deckel 76 und den Winkeleisen 80 erstrecken.

Nachfolgend wird auf die Wirkungsweise der gebogenen Bodenwand 42 und ihr Zusammenwirken mit der ersten Wand 40 kurz eingegangen. Unter der Annahme, daß sich eine komplette Rolle 74 mit Umhüllungsmaterial auf der gekrümmten Oberfläche 44 befindet, wie es in Fig. 3 dargestellt ist, erstreckt sich auch eine Bahn Umhüllungsmaterial von dem vorderen Ende der Rolle 74 nach unten durch den Querspalt 43, ist vorne und unten um die Spreizwalze 36 und dann nach rückwärts über die Oberseite der oberen Zuführwalze 28 und dann wieder nach vorne zwischen die Zuführwalzen 28, 30 hindurch geführt, wo sich ihr freies Ende befindet. Sobald in der Ballenformkammer 12 ein Rundballen fertig gewickelt ist, wird zum Umhüllen des Rundballens ein nicht dargestellter Antrieb für die Zuführwalzen 28, 30 eingeschaltet, wodurch letztere weiteres Material von der Rolle 74 abziehen, so daß das freie Ende in den Einzugsbereich 32 gelangt. Hier wird das freie Ende von den umlaufenden Riemen 14 erfaßt und über das Führungsblech 34 und gegebenenfalls weitere nicht dargestellte Führungsmittel weiter transportiert, bis es in die Ballenformkammer 12 zwischen den Riemen 14 und dem fertig geformten Rundballen eintritt, von dem umlaufenden Rundballen erfaßt und um diesen gewickelt wird. Sobald der Rundballen in den gewünschten Lagen mit Umhüllungsmaterial umwickelt ist, wird eine nicht gezeigte Schneidvorrichtung betätigt, wodurch ein Messer das Umhüllungsmaterial in dem Segment abschneidet, das sich zwischen den Zuführwalzen 28, 30 und dem Einzugsbereich 32 befindet, in dem das Umhüllungsmaterial gespannt ist. Nach dem Abschneiden laufen die Riemen 14 nur noch so lange um, bis auch das abgeschnittene Ende sich um den Rundballen gewickelt hat. Der Antrieb für die Riemen wird ausgeschaltet und die Auswurfklappe 20 durch Hochschwenken geöffnet, so daß der umwickelte Rundballen in herkömmlicher Weise austreten kann.

Während des vorbeschriebenen Wickelvorgangs wird die Rolle 74 mit dem Umhüllungsmaterial daran gehindert, frei umzulaufen, und zwar aufgrund einer Bremskraft, die auf die Peripherie der Rolle 74 infolge des Reibschlusses mit der Bodenwand 42 und der vorderen Wand 40 einwirkt. Die Oberfläche 44 ist gekrümmt ausgebildet und so gerichtet, daß das Gewicht der Rolle 74 dazu tendiert, sie zwischen die Bodenwand 42 und die vordere Wand 40 zu klemmen. Hinzu kommt, daß die Konfiguration und Richtung der Bodenwand 42 so mit Bezug auf die vordere Wand 40 gewählt sind, daß beim Abwickeln des Umhüllungsmaterials und sich dabei verringerndem Rollendurchmesser die Keil- oder Klemmewirkung größer wird, aber der Reibschluß oder der Widerstand gegen das freie Umlaufen der Rolle 74 konstant bleibt, und zwar bis zu einem Zeitpunkt, zu dem alles Umhüllungsmaterial von der Papprolle 75 abgewickelt ist.

## Ansprüche

1. Rundballenpresse (10) mit einer Vorrichtung (24) zum Umhüllen eines fertig in einer Ballenformkammer (12) gewickelten Rundballens aus landwirtschaftlichem Gut mit einer Materialbahn aus Netzwerk, Plastik oder dergleichen, wobei an die Rundballenpresse (10) ein Zuführgehäuse (38) zur Aufnahme des rollenförmigen Umhüllungsmaterials angeschlossen ist, das eine Bodenwand (42) und eine erste im wesentlichen vertikal verlaufende und sich quer über die Breite der Ballenformkammer (12) erstreckende Wand (40) aufweist, dadurch gekennzeichnet, daß die Bodenwand (42) in dem Zuführgehäuse (38) stationär angeordnet ist, mit Abstand vor der ersten Wand (40) endet, derart geneigt ausgebildet ist, daß sie sich von ihrem Ende vor der ersten Wand (40) schräg nach oben zu einer dem Ende abgelegenen Kante (52) erstreckt und eine derart geformte und mit der ersten Wand (40) zusammenwirkende Oberfläche (44) aufweist, daß der Reibwiderstand bei abrollendem Umhüllungsmaterial und sich dabei verkleinerndem Rollendurchmesser im wesentlichen konstant bleibt.

2. Rundballenpresse nach Anspruch 1, dadurch gekennzeichnet, daß die Oberfläche (44) der Bodenwand (42) mit Bezug auf eine Längsrichtung konvex ausgebildet ist.

3. Rundballenpresse nach Anspruch 1 oder 2, dadurch gekennzeichnet, daß die obere Kante (52) der Bodenwand (42) abgerundet ausgebildet ist.

4. Rundballenpresse nach einem oder mehreren der vorherigen Ansprüche, dadurch gekennzeichnet, daß in dem Zuführgehäuse (38) zwei Tragwände (26) mit einem gegenseitigen Abstand vorgesehen sind, der der Breite der Ballenformkammer (12) entspricht, wobei jede Tragwand (26) mit Abstand zu der ersten Wand (40) in ihrer Oberseite eine Aussparung (54) und mit noch größerem Abstand zu der ersten Wand (40) eine an ihrem oberen Ende abgebogene Lasche (46) aufweist und wobei das der ersten Wand (40) zugelegene Ende der Bodenwand (42) in den Aussparungen (54) aufgenommen ist und die Laschen (46) mit dem weiter von der ersten Wand (40) abgelegenen Bereich der Bodenwand (42) verbunden sind.

5. Rundballenpresse nach einem oder mehreren der vorherigen Ansprüche, dadurch gekennzeichnet, daß an jeder Tragwand (26) eine vertikal gerichtete Halteplatte (58) mit einer oberen abgewinkelten Kante (60) angeordnet ist, die oberhalb der Bodenwand (42) enden.

6. Rundballenpresse nach einem oder mehreren der vorherigen Ansprüche, dadurch gekennzeichnet, daß die Tragwände (26) in ihrem Bereich unterhalb des durch das Ende der Bodenwand (42) der ersten Wand (40) gebildeten Querspalts (43) eine Spreizrolle (36) über Schrauben (37) drehbar aufnehmen, die auch zum Anschluß des einen Endes der Halteplatten (58) dienen, deren anderes Ende mit den Tragwänden (26) über auch die Laschen (46) mit diesen verbindende Schrauben (48) verbunden ist.

FIG. 1

**FIG. 2**

FIG. 3

·Europäisches
Patentamt

**EUROPÄISCHER RECHERCHENBERICHT**

Nummer der Anmeldung

EP    90 11 1656

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2558032 (CLAAS) <br> * Seite 2, Zeilen 4 - 33; Figuren 1, 2 * <br> --- | 1 | A01F15/08 |
| D,A | DE-A-2032449 (KLOSE) <br> * Seite 4, letzter Absatz - Seite 5, letzter Absatz; Figuren 1, 2 * <br> --- | 1 | |
| A | US-A-4677807 (DEERE) <br> * Spalte 5, Zeile 22 - Spalte 6, Zeile 29; Figuren 1, 4, 5 * <br> ------ | 1 | |

**RECHERCHIERTE SACHGEBIETE (Int. Cl.5)**

A01F
B65H
A47K
A01G

Der vorliegende Recherchenbericht wurde für alle Patentansprüche erstellt

| Recherchenort | Abschlußdatum der Recherche | Prüfer |
|---|---|---|
| DEN HAAG | 01 OKTOBER 1990 | HERYGERS J.J. |